(19) Europäisches Patentamt
European Patent Office
Office européen des brevets

(11) **EP 1 769 685 A2**

(12) **EUROPÄISCHE PATENTANMELDUNG**

(43) Veröffentlichungstag:
**04.04.2007 Patentblatt 2007/14**

(51) Int Cl.:
*A23K 1/18* (2006.01)  *A23N 17/00* (2006.01)

(21) Anmeldenummer: **06019585.6**

(22) Anmeldetag: **19.09.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **29.09.2005 DE 102005048219**

(71) Anmelder: **BASF AKTIENGESELLSCHAFT**
**67056 Ludwigshafen (DE)**

(72) Erfinder:
• **Hayler, Ruth**
**68259 Mannheim (DE)**
• **Magnin, Michel**
**56150 Baud (FR)**
• **Esnault, David**
**35220 Chateaubourg Broons sur Vilaine (FR)**

(74) Vertreter: **Hössle Kudlek & Partner**
**Patentanwälte,**
**Postfach 10 23 38**
**70019 Stuttgart (DE)**

(54) **Verfahren und System zur Optimierung einer Dosiermenge eines Futterzusatzstoffes**

(57) Die vorliegende Erfindung betrifft ein Verfahren zur Optimierung einer Dosiermenge eines zur Milchfettgehalt- und Milchmengensteuerung verwendbaren Futterzusatzstoffes bei einem Fütterungsprozess von laktierenden Wiederkäuern, um eine vorgegebene Milchquote effizient auszuschöpfen, bei dem unter Berücksichtigung dosismengenabhängiger Effekte des Futterzusatzstoffes auf den Milchfettgehalt und die Milchmenge mittels einer Steuerungseinheit (2) unter Vorgabe prozessrelevanter Parameter Berechnungen über den Ausschöpfungsgrad der Milchquote bei dem Fütterungsprozess in Abhängigkeit der Dosiermenge des Futterzusatzstoffes ausgeführt und in Abhängigkeit von dem Ergebnis der Berechnungen Steuerinformationen zur Steuerung des Fütterungsprozesses angezeigt werden, wobei die Berechnungen mittels einer der Steuereinheit (2) zugeordneten Recheneinheit (3) durchgeführt und vor Erzeugung der Steuerinformationen mittels der Steuereinheit (2) überprüft und validiert werden. Ferner betrifft die vorliegende Erfindung ein geeignetes System (1) und einen zur Durchführung des Verfahrens geeigneten Algorithmus.

Figur 1

EP 1 769 685 A2

**Beschreibung**

Die vorliegende Erfindung betrifft ein Verfahren und ein System zur Optimierung einer Dosiermenge eines Futterzusatzstoffes bei einem Fütterungsprozess von laktierenden Wiederkäuern, insbesondere bezieht sich die Erfindung auf ein Verfahren und ein System zur Optimierung der Dosiermenge eines zur Milchfettgehalt- und Milchmengensteuerung verwendbaren Futterzusatzstoffes, um eine vorgegebene Milchquote effizient ausschöpfen zu können. Ferner umfasst die vorliegende Erfindung ein entsprechendes Computerprogramm, ein Computerprogrammprodukt und ein computerlesbares Medium.

**Hintergrund der Erfindung**

Im Rahmen der EU-Agrarpolitik wurde 1984 eine Maßnahme erlassen, die eine Milch-Überproduktion begrenzen soll. Diese vorgenommene Maßnahme sieht vor, dass im Bereich der Milcherzeugung jeder Milcherzeuger nur eine bestimmte Menge bzw. ein bestimmtes Kontingent an Milch innerhalb eines Milchjahres produzieren darf. Diese Menge wird zu einem Garantiepreis, d.h. einem Interventionspreis zuzüglich molkereiabhängiger Aufschläge für Milcheiweiß und Milchfett, abgenommen. Diese Menge an Milch wird als Milchreferenzmenge oder, wie im Folgenden, als sogenannte Milchquote bezeichnet. Die Milchquote basiert auf einem Milchvolumen und einem mittleren Milchfettgehalt der nem mittleren Milchfettgehalt der angelieferten Milch. Bei abweichenden Milchfettgehalten in der Milch wird das Milchvolumen entsprechend korrigiert. Bei Überschreiten des Referenzmilchfettgehaltes korrigiert sich das Milchvolumen nach unten, bei niedrigeren Milchfettgehalten nach oben, man spricht von fettkorrigierter Milch. Somit kann ein milchproduzierender Betrieb die Ausnutzung seiner Milchquote in Abhängigkeit vom mittleren Milchfettgehalt steuern. Dabei steigt die Profitabilität mit abnehmendem Milchfettgehalt und steigender Milchmenge. Überlieferung der Milchquote wird mit einer Superabgabe geahndet. Eine Korrektur des Milchvolumens bei abweichendem Milchfettgehalt wird an folgendem Beispiel kurz erläutert. Der funktionale Zusammenhang zwischen einer vorgegebenen Milchquote, einem mittlerem Milchfettgehalt, einem vorgegebenen Referenzmilchfettgehalt und einer sich daraus ggf. ergebenden korrigierten Milchquote, die einem korrigierten Milchvolumen entspricht, lautet wie folgt:

$$Milchquote_{korr} = Milchquote - (Milchfettgehalt_{mittl.} - Milchfettgehalt_{Referenz}) * 0,18 * Milchquote$$

Ist beispielsweise eine Milchquote von 500.000l und ein Referenzmilchfettgehalt *Milchfettgehalt*$_{Referenz}$ von 3,8% vorgegeben und beträgt der mittlere Milchfettgehalt *Milchfettgehalt*$_{mittl.}$ demgegenüber 4,3% so ergibt sich dann eine korrigierte Milchquote wie folgt:

$$Milchquote_{korr} = 500.000l - ((4,3-3,8) * 0,18 * 500.000l) = 455.000l$$

Das bedeutet, dass aufgrund des gegenüber dem Referenzmilchfettgehalt höheren mittleren Milchfettgehalts, nur ein geringeres Milchvolumen zu einem Garantiepreis abgenommen wird.

Eine Senkung des Milchfettgehaltes kann durch Einsatz von entsprechenden Produkten erzielt werden. Bislang gibt es ein marktfähiges Produkt, das zur Senkung des Milchfettgehaltes bei Milchkühen und anderen laktierenden Wiederkäuern eingesetzt werden kann. Dieses Produkt, was bei Fütterung von Milchkühen Anwendung findet und zur Senkung des Milchfettgehaltes bei gleichzeitiger Steigerung der Milchmenge in der Frühlaktation dient, ist unter der Bezeichnung "Lutrell" auf dem Markt. Der Einsatz dieses Produktes erlaubt eine profitablere Ausnutzung der oben erwähnten Milchquote, die jedem Milcherzeuger spezifisch zugewiesen ist.

Um eine optimierte Milchquotenausnutzung durch den Einsatz von oben genannten Produkten, insbesondere des derzeit zur Verfügung stehenden Produkts "Lutrell", erlangen zu können, ist es wünschenswert, ein Verfahren und ein System bereitzustellen, mit deren Hilfe es möglich wird, für einen bestimmten Milcherzeugerbetrieb eine Optimierung einer Dosiermenge eines zur Milchfettgehalt- und Milchmengensteuerung verwendbaren Futterzusatzstoffes bei einem Fütterungsprozess von laktierenden Wiederkäuern durchzuführen, um eine vorgegebene betriebseigene Milchquote effizient ausschöpfen zu können.

**Zusammenfassung der Erfindung**

Vor dem Hintergrund dieser Problemstellung schlägt die vorliegende Erfindung nunmehr ein Verfahren mit den Merkmalen von Patentanspruch 1, ein System mit den Merkmalen von Patentanspruch 9, ein Computerprogramm mit den Merkmalen von Patentanspruch 12, ein Computerprogrammprodukt mit den Merkmalen von Patentanspruch 13 und ein computerlesbares Medium mit den Merkmalen des Patentanspruchs 14 vor.

Gemäß Patentanspruch 1 wird ein Verfahren zur Optimierung einer Dosiermenge eines zur Milchfettgehalt- und Milchmengensteuerung verwendbaren Futterzusatzstoffes bei einem Fütterungsprozess von laktierenden Wiederkäuern bereitgestellt, um eine vorgegebene Milchquote effizient auszuschöpfen. Bei dem erfindungsgemäß vorgesehenen Verfahren werden unter Berücksichtigung dosismengenabhängiger Effekte des Futterzusatzstoffes auf den Milchfettgehalt und die Milchmenge mittels einer Steuereinheit unter Vorgabe prozessrelevanter Parameter Berechnungen über den Ausschöpfungsgrad der Milchquote bei dem Fütterungsprozess in Abhängigkeit der Dosiermenge des Futterzusatzstoffes ausgeführt und in Abhängigkeit von dem Ergebnis der Berechnungen Steuerinformation zur Steuerung des Fütterungsprozesses angezeigt. Dabei werden die Berechnungen mittels einer der Steuereinheit zugeordneten Recheneinheit durchgeführt und vor Erzeugung der Steuerinformation mittels der Steuereinheit überprüft und validiert.

Erfindungsgemäß wird zur Durchführung der Berechnungen eine der Steuereinheit zugeordnete Recheneinheit herangezogen, bei der es sich bspw. um einen sogenannten Personal Computer (PC), eine Steuerprogrammierbare Steuerung (SPS) oder andere konventionelle Rechnersysteme handeln kann, und auf der die Berechnungen durchgeführt werden. Das Ergebnis der Berechnungen dient als Grundlage zur Erzeugung und Anzeige von Steuerinformationen zur Steuerung des Fütterungsprozesses. Das Ergebnis der Berechnungen wird von der Steuereinheit überprüft und validiert, bevor auf der Grundlage der Rechenergebnisse Steuerinformationen für den Fütterungsprozess erzeugt werden. Die Berechnungen führen bspw. zu einem funktionalen Zusammenhang zwischen dem Ausschöpfungsgrad der vorgegebenen Milchquote und der Dosiermenge des Futterzusatzstoffes. Der funktionale Zusammenhang kann mehrere Parameter, insbesondere betriebsspezifische Parameter umfassen und zudem Rand- und/oder Nebenbedingungen berücksichtigen. Durch Vorgabe von Rand- bzw. Nebenbedingungen kann bspw. ein begrenzter seitens eines Nutzers gewählter Zeitraum berücksichtigt werden, in welchem der Futterzusatzstoff eingesetzt werden soll. Ferner kann bspw. ein zum Zeitpunkt der Durchführung der Berechnungen bereits erreichter Ausschöpfungsgrad der Milchquote, wie bspw. eine bereits ausgelieferte Milchmenge, berücksichtigt werden.

Der Vorteil des erfindungsgemäßen Verfahrens ist darin zu sehen, dass ohne langwierige "Testläufe" beim Einsatz des Futterzusatzstoffes bei dem Fütterungsprozess, mittels derer eine heuristische Evaluierung der Ausnutzung der vorgegebenen Milchquote möglich ist, nunmehr unter Vorgabe prozessrelevanter Parameter schnell Aussagen darüber gemacht werden können, wie die vorgegebene Milchquote effizient ausgeschöpft werden kann.

Hierbei können, wie bereits erwähnt, eine Reihe von Parametern, die für den Fütterungsprozess relevant sind, berücksichtigt werden. Mit Hilfe des erfindungsgemäßen Verfahrens ist es möglich, einem Milcherzeuger, d.h. im Allgemeinen einem Landwirt, eine grundlegende Vorinformation zu einem ökonomischen Nutzen des Einsatzes des Futterzusatzstoffes zu geben.

Bei den laktierenden Wiederkäuern kann es sich bspw. um Kühe bzw. Rinder, Ziegen oder Schafe handeln. Bei dem Futterzusatzstoff kann es sich dabei, wie bereits eingangs erwähnt, bspw. um das unter der Bezeichnung "Lutrell" vertriebene Produkt handeln. Das Produkt "Lutrell" findet generell Anwendung in der Fütterung von Milchkühen und dient dabei zur Senkung des Milchfettgehaltes bei gleichzeitiger Steigerung der Milchmenge in der sogenannten Frühlaktation.

Diese Effekte erlauben eine profitablere Ausnutzung der betriebseigenen Milchquote.

Mittels des erfindungsgemäßen Verfahrens ist es nunmehr möglich eine Berechnung der Profitabilität des Lutrelleinsatzes und eine Berechnung einer optimierten Lutrelldosiermenge bzw.- dosierung betriebsspezifisch zu berechnen.

Bei dem erfindungsgemäßen Verfahren ist es möglich, dass zunächst eine Reduktion der Milchfettmenge und eine Erhöhung der Milchmenge durch Einsatz des Futterzusatzstoffes zusammen mit den damit einhergehenden Auswirkungen auf den Ausschöpfungsgrad der vorgegebenen Milchquote errechnet wird.

In einer möglichen Ausführungsform des erfindungsgemäßen Verfahrens wird unter Vorgabe einer Anzahl von laktierenden Wiederkäuern in einer Herde, einer durchschnittlichen Milchleistung pro laktierendem Wiederkäuer der Herde, einem durchschnittlichen Milchfett- und Proteingehalt der Herde und eines Referenzmilchfettgehaltes der Ausschöpfungsgrad der Milchquote in Abhängigkeit der Dosiermenge des Futterzusatzstoffes berechnet und zur Steuerung des Fütterungsprozesses zur Anzeige gebracht. Dabei sind die vorzugebenden Werte Werte, die ohne Einsatz des Futterzusatzstoffes erzielt werden.

In einer weiteren Ausführungsform des erfindungsgemäßen Verfahrens ist vorgesehen, dass durch zusätzliche Vorgabe eines Milchauszahlungspreises ein maximal erzielbarer Profit pro laktierendem Wiederkäuer für einen vorgebbaren Zeitraum ohne und mit Einsatz des Futterzusatzstoffes berechnet, daraus ein maximaler durch Einsatz des Futterzusatzstoffes bewirkter zusätzlicher Profit pro laktierendem Wiederkäuer für den entsprechenden Zeitraum abgeleitet und die Ergebnisse zur Anzeige gebracht werden. Der sogenannte Milchauszahlungspreis setzt sich zusammen aus einem sogenannten Basispreis, einem Zuschlag pro %-Punkt Fett und einem Zuschlag pro %-Punkt Eiweiß.

Die mittels des erfindungsgemäßen Verfahrens vorgenommenen Berechnungen ermöglichen es nun einem Nutzer, einen höchstmöglichen zusätzlichen Profit, bspw. pro Wiederkäuer bspw. pro Jahr ermitteln zu können. Dadurch wird es für einen Nutzer möglich, die Verwendung des Futterzusatzstoffes hinsichtlich des daraus resultierenden Profits zu optimieren.

Bei den Berechnungen können hinsichtlich des vorgebbaren Zeitraumes verschiedene Betrachtungen zugrunde gelegt werden.

Zum einen kann eine Betrachtung für ein vollständiges Milchwirtschaftsjahr, eine Betrachtung bis zum Erreichen der vorgegebenen Milchquote und eine Betrachtung im laufenden Milchwirtschaftsjahr ab einem beliebigen vorgebbaren Datum zugrunde gelegt werden.

Die in Abhängigkeit von dem Ergebnis der jeweiligen Berechnungen erhaltenen Steuerinformationen zur Steuerung des Fütterungsprozesses können graphisch dargestellt werden.

Alternativ zu einer Berechnung für ein gesamtes Milchwirtschaftsjahr können auch ganze Jahresproduktionen verglichen werden. Auf Basis der genannten prozessrelevanten Parametern, wie vorgegebene Milchquote, Milchmenge, Milchfettgehalt und Milchpreise kann der Profit aus dem Verkauf der produzierten Milchjahresmenge ohne und mit Einsatz des Futterzusatzstoffes berechnet werden. Dabei können Kosten für den Einsatz des Futterzusatzstoffes miteingerechnet werden. Das bedeutet, dass die Kosten für den Futterzusatzstoff, wie bspw. von Lutrell, bereits berücksichtigt werden. Der verbleibende Gewinn ist bereits um die Lutrellkosten reduziert bzw. korrigiert. Sofern bei der Berechnung für ein gesamtes Milchwirtschaftsjahr die vorgegebene Milchquote überschritten wird, wird eine zu erwartende Superabgabe kalkuliert und von dem Erlös aus dem Verkauf der produzierten Milchjahresmenge abgezogen.

Ferner ist es möglich eine Berechnung bis zum Erreichen der vorgegebenen Milchquote durchzuführen. Die hier durchzuführende Berechnung ist ähnlich wie die oben genannte Berechnung für das gesamte Milchwirtschaftsjahr, allerdings wird hier nur der Erlös aus dem Verkauf der produzierten Milchjahresmenge mit und ohne Einsatz des Futterzusatzstoffes bis zum Erreichen der vorgegebenen Milchquotengrenze berechnet. Auch hier können die Kosten für den Einsatz des Futterzusatzstoffes eingerechnet werden.

Darüber hinaus ist es denkbar, eine Berechnung im laufenden Milchwirtschaftsjahr durchzuführen. Auf Basis der prozessrelevanten Parameter, wie Milchquote, Milchmenge und Milchfettgehalt, kann zunächst ein voraussichtliches Erreichen der Milchquote zu einem Tag X bestimmt werden. Unter Berücksichtigung dosismengenabhängiger Effekte des Futterzusatzstoffes auf den Milchfettgehalt und die Milchmenge kann in einem zweiten Schritt das Erreichen der vorgegebenen Milchquote bei Zugabe des Futterzusatzstoffes berechnet und sodann aus der Differenz sogenannte "Mehrtage" bestimmt werden, in denen ohne eine Überschreitung der Milchquote Milch produziert werden kann.

In einer weiteren Ausführungsform des erfindungsgemäßen Verfahrens werden neben prozessrelevanten Parametern auch betriebsspezifische Parameter vorgegeben. Dabei kann eine Eingabe von betriebsspezifischen Besonderheiten und unter Berücksichtigung dieser Besonderheiten eine Optimierung der Dosiermenge des Futterzusatzstoffes vorgesehen werden. Zu derartigen betriebsspezifischen Eingaben gehören bspw. eine gezielte Fütterung des Futterzusatzstoffes an bestimmte sogenannte Leistungsgruppen unter den laktierenden Wiederkäuern und eine Variation der Einsatzdauer des Futterzusatzstoffes.

Eine Berechnung unter Berücksichtigung derartiger betriebsspezifischer Besonderheiten ermöglicht eine optimierte Empfehlung des Einsatzes des Futterzusatzstoffes für einen jeweiligen Betrieb sowie eine individuelle Schätzung des durch Einsatz des Futterzusatzstoffes erzielbaren Profits.

In einer anderen möglichen Ausführungsform des erfindungsgemäßen Verfahrens wird zur Vorgabe der zur Durchführung der Berechnung vorzugebenen Parametern ein Framework bereitgestellt, über welches die Parameter eingegeben werden können. Das bereitgestellte Framework kann dabei über ein Display einem Nutzer zur Anzeige gebracht werden, sodass der Nutzer über entsprechend vorgesehene Eingabefelder die prozessrelevanten Daten eingeben kann.

In einer weiteren möglichen Ausführungsform des erfindungsgemäßen Verfahrens wird anhand der durchgeführten Berechnungen ein Futter hergestellt, welches den Futterzusatzstoff in einer derartigen Menge enthält, dass der Ausschöpfungsgrad der Milchquote unter Berücksichtigung des Milchfettgehaltes optimiert wird. Gewisse Grenzvorgaben für den Milchfettgehalt sind dabei nicht explizit vorgegeben. Deutsche Normmilch enthält bspw. 3,7% Fett, was als Richtwert angesehen werden kann, der eingehalten werden sollte, der aber in der Regel oft unterschritten wird. Konsumierte Milch enthält meist nur 3,5% Fett oder weniger.

Dabei ist es ferner denkbar, aus den Berechnungen eine Zeitdauer, über welche das hergestellte Futter gefüttert wird, derart zu bestimmen, dass dadurch eine maximale Profitabilität erreicht werden kann.

Die vorliegende Erfindung betrifft ferner ein System zur Optimierung einer Dosiermenge eines zur Milchfettgehalt- und Milchmengensteuerung verwendbaren Zusatzstoffes bei einem Fütterungsprozess von laktierenden Wiederkäuern, um eine vorgegebene Milchquote effizient auszuschöpfen. Das erfindungsgemäße System umfasst dabei mindestens eine Steuereinheit, mittels welcher unter Berücksichtigung dosismengenabhängiger Effekte des Futterzusatzstoffes auf den Milchfettgehalt und die Milchmenge unter Vorgabe prozessrelevanter Parameter Berechnungen über den Ausschöpfungsgrad der Milchquote bei dem Fütterungsprozess in Abhängigkeit von der Dosiermenge des Futterzusatzstoffes ausgeführt und in Abhängigkeit von dem Ergebnis der Berechnungen Steuerinformationen zur Steuerung des Fütterungsprozesses erzeugt werden können, eine Recheneinheit, die der Steuereinheit zugeordnet ist und mittels derer die Berechnungen ausgeführt werden können und eine Anzeigeneinheit, die dazu geeignet ist, das Ergebnis der Berechnungen anzuzeigen. Die Berechnungen können bspw. auf Basis eines seitens der Recheneinheit bereitgestellten Frameworks durchgeführt werden. Das Framework stellt dabei auf die erfindungsgemäß durchzuführenden Berechnungen zugeschnittene Grundfunktionen bereit. Bei einer entsprechenden Belegung mit weiteren berechnungsrelevanten Parametern können dann die spezifischen Berechnungen ausgeführt werden.

In einer Ausführungsform des erfindungsgemäßen Systems ist vorgesehen, dass ferner eine Eingabeeinheit bereitgestellt wird, über welche die Parameter eingegeben werden können.

Die Eingabeeinheit kann dabei so konfiguriert sein, dass die Parameter über eine geeignete auf einer Anzeigeneinheit darstellbare Eingabemaske eingegeben werden können. Die Eingabemaske kann dabei ein Abbild eines bereits erwähnten für die Berechnungen Grundfunktionen bereitstellenden Frameworks sein.

Die vorliegende Erfindung umfasst ferner ein Computerprogramm mit Programmcode, der bei Ausführung des Computerprogramms auf einer geeigneten Computeranlage, insbesondere einer Recheneinheit eines erfindungsgemäßen Systems zur Durchführung eines erfindungsgemäßen Verfahrens geeignet ist.

Ferner betrifft die vorliegende Erfindung ein Computerprogrammprodukt mit einem computerlesbaren Medium und einem auf dem computerlesbaren Medium gespeicherten Computerprogramm mit Programmcodemitteln, die dazu geeignet sind, bei Ablauf des Computerprogramms auf einer geeigneten Computeranlage, insbesondere einer Recheneinheit eines erfindungsgemäßen Systems ein erfindungsgemäßes Verfahren durchzuführen.

Die Erfindung umfasst darüber hinaus ein computerlesbares Medium mit einem darauf gespeicherten Computerprogramm, das einen Programmcode umfasst, der bei Ausführung des Computerprogramms auf einer geeigneten Computeranlage, insbesondere einer Recheneinheit eines erfindungsgemäßen Systems zur Durchführung eines erfindungsgemäßen Verfahrens geeignet ist.

Mit Hilfe des erfindungsgemäßen Verfahrens und/oder des erfindungsgemäßen Systems kann die Dosiermenge eines Futterzusatzstoffes, wie bspw. von "Lutrell" unter Berücksichtigung dosismengenabhängiger Effekte des Futterzusatzstoffes auf den Milchfettgehalt und die Milchmenge anhand prozessrelevanter Parameter optimiert werden. Im Falle von Milchkühen, können dabei derartige prozessrelevante Parameter die folgenden Parameter umfassen: Anzahl Milchkühe/Herde, durchschnittliche Milchleistung/Milchkuh, durchschnittlicher Milchfettgehalt der Herde, durchschnittlicher Proteingehalt der Herde, Milchquote, Referenzmilchfettgehalt und Milchauszahlungspreis. Mittels des erfindungsgemäßen Verfahrens und/oder des erfindungsgemäßen Systems kann anhand dieser Parameter bspw. der höchstmögliche zusätzliche Profit/Milchkuh/Jahr berechnet werden. Mittels des erfindungsgemäßen Verfahrens bzw. des erfindungsgemäßen Systems kann die Wirtschaftlichkeit des Futterzusatzstoffes beliebig modelliert und auf spezifische Betriebsbedingungen abgestimmt werden. Es kann eine Berechnung einer optimierten Milchquotenausnutzung durch den Einsatz von Futterzusatzstoffen jeglicher Art zur Senkung des Milchfettgehaltes bei Milchkühen und anderen laktierenden Wiederkäuern durchgeführt werden.

Weitere Vorteile und Ausgestaltungen der Erfindung ergeben sich aus der Beschreibung der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

**Kurzbeschreibung der Zeichnung**

Figur 1    zeigt schematisch einen möglichen strukturellen Aufbau einer Ausführungsform eines erfindungsgemäßen Systems,

Figur 2    zeigt eine mögliche auf einer Anzeigeeinheit darstellbare Eingabemaske, die bspw. auf einem Framework basiert, zur Eingabe von Parametern zur Durchführung einer Ausführungsform des erfindungsgemäßen Verfahrens, und

Figur 3    zeigt eine mögliche Ausführungsform eines Algorithmusses, der zur Durchführung des erfindungsgemäßen Verfahrens herangezogen werden kann.

**Detaillierte Beschreibung der Zeichnung**

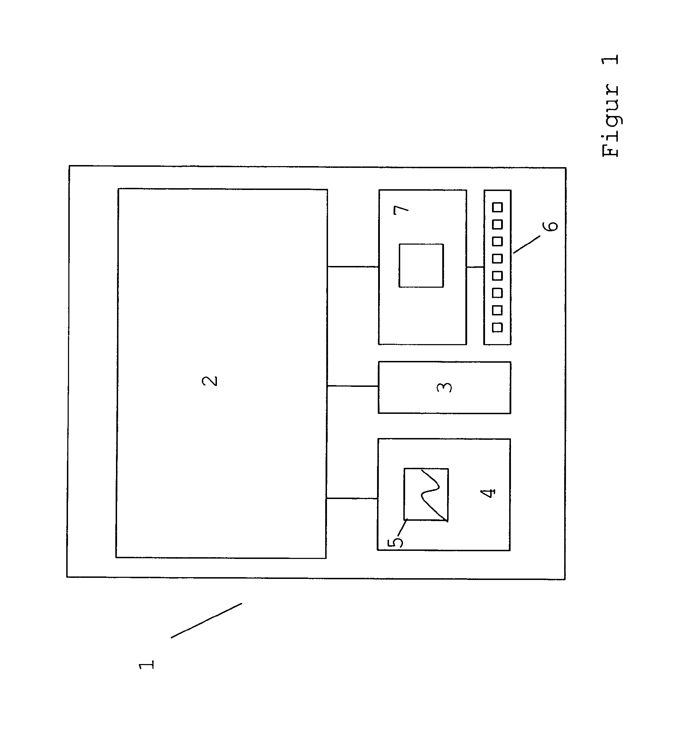

Figur 1 zeigt ein System 1 zur Optimierung einer Dosiermenge eines zur Milchfettgehalt- und Milchmengensteuerung verwendbaren Futterzusatzstoffes bei einem Fütterungsprozess von laktierenden Wiederkäuern. Das System umfasst eine Steuereinheit 2, mittels welcher unter Berücksichtigung dosismengenabhängiger Effekte des Futterzusatzstoffes auf den Milchfettgehalt und die Milchmenge unter Vorgabe prozessrelevanter Parameter Berechnungen über den Ausschöpfungsgrad einer vorgegebenen Milchquote bei dem Fütterungsprozess ausgeführt werden können. In Abhängigkeit des Ergebnisses derart durchgeführter Berechnungen können ferner Steuerinformationen zur Steuerung des Fütterungsprozesses mit Hilfe der Steuereinheit 2 erzeugt werden. Die Steuereinheit 2 umfasst eine ihr zugeordnete Recheneinheit 3. Mit Hilfe der Recheneinheit 3 werden die eigentlichen Berechnungen ausgeführt. Bei der Recheneinheit 3 kann es sich dabei um einen Personal Computer (PC), eine SPS oder eine andere konventionelle Rechenanlage handeln. Das System 1 umfasst ferner eine Anzeigeeinheit 4, die dazu geeignet ist, das Ergebnis der mittels der Steuereinheit 2 durchgeführten Berechnungen anzuzeigen. Die Anzeigeeinheit 4 kann dabei in die Steuereinheit 2 integriert sein. Die Anzeigeeinheit 4 kann jedoch auch separat angeordnet sein und mit der Steuereinheit 2 und/oder der Recheneinheit 3 über eine geeignete Kommunikationsverbindung verbunden sein. Die Anzeigeeinheit 4 kann dabei ein Display 5 umfassen, auf welchem eine graphische Darstellung der bzw. des Ergebnisses der durch die Steuereinheit 2 durchgeführten Berechnungen möglich ist. Das System 1 kann ferner eine Eingabeeinheit 6 vorsehen, über welche prozessrelevante Parameter eingegeben werden können. Eine derartige Eingabeeinheit 6 kann, wie hier dargestellt, so konfiguriert sein, dass die prozessrelevanten Parameter über eine geeignete auf einer Anzeigeeinheit 7 darstellbaren Eingabemaske eingegeben werden können. Die dargestellte Eingabemaske kann dabei auf ein den Berechnungen zugrundeliegendes Framework abgestimmt sein. Das Framework stellt dabei bspw. Grundfunktionen ggf. in geeigneter Kombination bzw. Verknüpfung bereit, die zur Durchführung der Berechnungen benötigt werden. Die Anzeigeeinheit 7 kann mit der Anzeigeeinheit 4 kombiniert werden. Die Eingabeeinheit 6 kann bspw. eine Tastatur sein, die mit der Recheneinheit 3 verbunden ist und über welche die Parameter mittels einer auf der Anzeigeeinheit 7 dargestellten Eingabemaske eingegeben werden können, sodass die eingegebenen Parameter in der Anzeigeeinheit 7, wie bspw. auf einem Display angezeigt werden. Die zur Eingabe der Parameter geeignete auf einem Display der Anzeigeeinheit 7 dargestellte Eingabemaske kann bspw. Felder vorsehen, in welche mit Hilfe eines Cursors über die mit der Recheneinheit 3 gekoppelte Tastatur entsprechende Parameter eingegeben werden können. Nach Eingabe prozessrelevanter Parameter in die entsprechend dafür vorgesehenen Felder der auf dem Display dargestellten Eingabemaske können bspw. durch einen entsprechend ebenfalls auf dem Display vorgesehenen "Button" oder durch Drücken der "Return"-Taste der Tastatur die Berechnungen durch die Recheneinheit 3 in Gang bzw. initiiert werden. Die dabei sich ergebenden Resultate können dann bspw. auf dem gleichen Display graphisch dargestellt werden. Es ist jedoch auch möglich, dass eine derartige graphische Darstellung auf einem anderen zweiten Display vorgenommen werden kann. Jede andere Form der Anzeige ist jedoch auch denkbar. Auf Grundlage der Resultate der Berechnungen können dann Steuerinformationen generiert und zur Steuerung des Fütterungsprozesses verwendet werden. Vor Generierung der Steuerinformationen werden die Resultate der Berechnungen von der Steuereinheit 2 überprüft und validiert. Es ist denkbar, dass die Steuerinformation unmittelbar zu einer automatischen Ansteuerung einer Dosierung des Futterzusatzstoffes bei dem Fütterungsprozess führt.

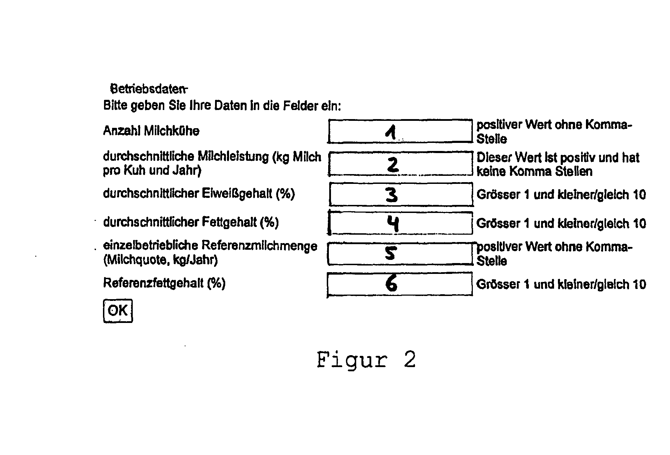

Figur 2 zeigt eine mögliche Darstellung einer auf einer Anzeigeeinheit bzw. einem Display einer Anzeigeeinheit dargestellten Eingabemaske, mit deren Hilfe prozessrelevante Parameter zur Durchführung eines erfindungsgemäßen Verfahrens eingegeben werden können. Die hier anzugebenden Parameter werden als Betriebdaten bezeichnet, was anzeigt, dass das Verfahren unter Berücksichtigung betriebsspezifischer Parameter, d.h. auf einen spezifischen Betrieb abgestimmt, durchgeführt werden kann. Zur Erleichterung der Eingabe, sind die auszufüllenden Felder 1-6 entsprechend kommentiert, sodass ein Milcherzeuger bzw. ein Nutzer genau darüber informiert ist, welche Eingaben in die einzelnen Felder zu machen sind. Mit Hilfe eines Cursors und einer geeigneten Tastatur kann ein Nutzer nunmehr in die Felder 1-6 die entsprechenden Parameter einsetzen. In Feld 1 ist eine Anzahl von Milchkühen zu geben. Dabei kann nur ein positiver Wert ohne Komma-Stelle eingegeben werden. In Feld 2 ist eine durchschnittliche Milchleistung, d.h. Kilogramm Milch pro Milchkuh und Jahr einzugeben. Dieser Wert ist positiv und hat ebenfalls keine Komma-Stellen. In Feld 3 ist ein durchschnittlicher Protein- bzw. Eiweißgehalt in Prozent anzugeben. Dieser Wert kann dabei nur in dem Bereich zwischen 1 und 10 liegen, d.h. er muss größer als 1 und kleiner oder gleich 10 sein. Gleiches gilt für einen in Feld 4 einzusetzenden Milchfettgehalt, der ebenfalls in Prozent angegeben wird. In Feld 5 ist eine einzelbetriebliche Referenzmilchmenge, d.h. eine Milchquote in Kilogramm pro Jahr anzugeben. Auch dieser Wert kann nur als positiver Wert ohne Komma-Stelle angegeben werden. In Feld 6 ist ein Referenzmilchfettgehalt in Prozent einzusetzen, welcher größer 1 und kleiner oder gleich 10 sein muss. Alle Werte, die hier eingegeben werden sind dabei zunächst Werte, die ohne Einsatz eines Futterzusatzstoffes Gültigkeit haben. Nach Einsatz all dieser prozessrelevanten Parameter kann der Nutzer nunmehr durch Setzen des Cursors auf den mit "OK" bezeichneten Icon und/oder durch Betätigung der "Return"-Taste Berechnungen über den Ausschöpfungsgrad der angegebenen Milchquote bei einem Fütterungsprozess ausführen, wobei bei den Berechnungen dosismengenabhängige Effekte eines verwendbaren Futterzusatzstoffes auf den Milchfettgehalt und die Milchmenge berücksichtigt werden. Die über das Drücken der "Return"-Taste initiierten Berechnungen werden durch eine mit der Anzeigeeinheit gekoppelte Recheneinheit durchgeführt, die anhand der eingegebenen Parameter automatisch die entsprechenden Berechnungen ausführt. Die Ergebnisse bzw. das Ergebnis der seitens der Recheneinheit durchgeführten Berechnungen können ebenfalls auf dem Display der Anzeigeeinheit zur Anzeige gebracht werden. Es ist jedoch auch möglich, dass ein zweites Display vorgesehen ist, über welches die Resultate bzw. Ergebnisse der Berechnungen angezeigt werden können.

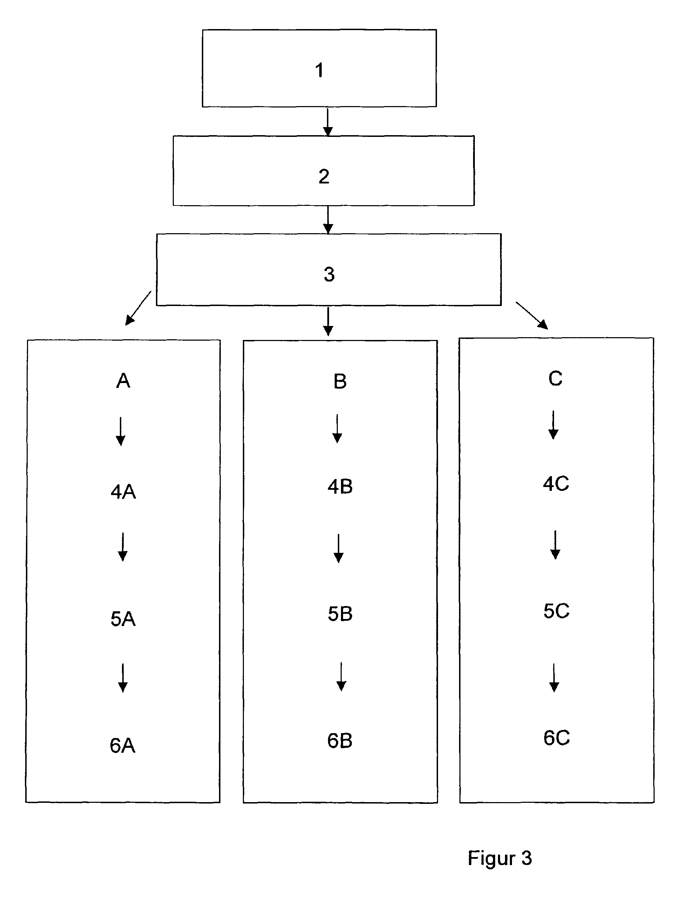

Figur 3 zeigt schematisch einen möglichen Algorithmus, mit dessen Hilfe ein Verfahren zur Optimierung einer Dosiermenge eines zur Milchfettgehalt- und Milchmengensteuerung verwendbaren Futterzusatzstoffes bei einem Fütterungsprozess von laktierenden Wiederkäuern, um eine vorgegebene Milchquote effizient auszuschöpfen, durchgeführt werden kann. Der hier gezeigte Algorithmus ist in mehrere Schritte unterteilbar, die bei Durchführung des Verfahrens durchlaufen werden. Während die Schritte 1 bis 3 in allen hier dargestellten Fällen bei Durchführung des Verfahrens durchlaufen werden, sind die daran sich anschließenden Schritte abhängig von einer entsprechend nutzerseitig vornehmbaren Wahl zwischen drei hier aufgezeigten alternativen Berechnungswegen.

In Schritt 1 kann seitens eines Nutzers zunächst eine Sprache ausgewählt werden, in welcher ihm eine für weitere Eingaben zu verwendende Benutzeroberfläche bzw. Eingabemaske zur Verfügung gestellt werden soll. Ferner kann der Nutzer in Schritt 1 eine Sprache in Abhängigkeit von dem Land bzw. dem Gebiet auswählen, welches für den Nutzer relevant ist. Ist bspw. einer Sprache mehr als ein Land zugeordnet, wie bspw. Deutsch Deutschland, Österreich und Schweiz oder Niederländisch Niederlande und Belgien, so kann hier ein Produktionsland automatisch abgefragt werden, um die je nach Land ggf. differierend durchzuführenden Berechnungen korrekt durchführen zu können.

In Schritt 2 werden dann die in Bezug auf Figur 2 bereits aufgeführten sogenannten Betriebsdaten eingegeben und erfasst. Es handelt sich dabei um berechnungsrelevante Größen, d.h. um Daten, die für eine Berechnung hinsichtlich einer Optimierung eines Einsatzes eines Futterzusatzstoffes benötigt werden.

In Schritt 3 kann der Nutzer nun zwischen drei alternativen Berechnungswegen wählen. Er kann dabei einen Zeitraum wählen, der bei einer Berechnung im Hinblick auf eine Optimierung einer Dosiermenge eines Futterzusatzstoffes zu Grunde gelegt werden soll. Zum Einen kann er dabei einen Berechnungsweg A wählen, bei dem eine Berechnung bis zum Erreichen einer vorgegebenen Milchquote durchgeführt wird. Ferner kann er einen alternativen Berechnungsweg B wählen, nach dem eine Berechnung für ein gesamtes Milchwirtschaftsjahr durchgeführt wird. Der Nutzer kann jedoch auch gemäß einem Berechnungsweg C eine Berechung für ein laufendes Milchwirtschaftsjahr auswählen.

Je nach Wahl des Berechnungsweges, den der Nutzer in Schritt 3 ausgewählt hat, verläuft nun das weitere Verfahren gemäß 3 unterschiedlichen Schrittabfolgen, die im Folgenden näher erläutert werden.

Gemäß Berechnungsweg A wird eine Berechnung mit dem Ziel durchgeführt, eine Optimierung des Einsatzes des Futterzusatzstoffes, wie bspw. von Lutrell, bis zum Erreichen der vorgegebenen Milchquote zu erreichen.

Dazu erfolgt zunächst in Schritt 4A eine Erfassung von Marktbezugsgrößen, die je nach Land und Wirtschaftsjahr differieren können. Dabei handelt es sich bspw. u.a. um einen Milchbasispreis und um Zu- und Abschläge. Nach Erfassung dieser Größen erfolgt sodann in Schritt 5A eine Berechnung einer optimierten Dosiermenge des Futterzusatzstoffes unter Verwendung der in Schritt 2 eingegeben Daten im Hinblick auf einen wirtschaftlichen Vorteil und unter Berücksichtigung betriebsindividueller Bedingungen bzw. Restriktionen, die u.a. ebenfalls in Schritt 2 eingegebenen und erfasst worden sein können oder anderweitig für einen Nutzer im Voraus spezifisch implementiert worden sein können. Nach erfolgter Berechnung kann nun in Schritt 6A vorgesehen sein, eine daraus resultierende Empfehlung hinsichtlich einer Dosiermenge des Futterzusatzstoffes über eine Standardschnittstelle für einen Fütterungscomputer bereitzustellen. Ein sich ebenfalls aus den Berechnungen ableitbarer Profit aufgrund eines Einsatzes des Futterzusatzstoffes kann angezeigt werden, was insbesondere in der Währung des Landes vorgenommen werden kann, was in Schritt 3 als Produktionsland angegeben wurde.

Gemäß Berechnungsweg B wird eine Berechnung mit dem Ziel durchgeführt, eine Optimierung des Einsatzes des Futterzusatzstoffes, wie bspw. von Lutrell, für ein gesamtes Milchwirtschaftsjahr zu erreichen.

Dazu erfolgt in Schritt 4B zunächst wiederum eine Erfassung von Marktbezugsgrößen, die je nach Land und Wirtschaftsjahr differieren können. Dabei handelt es sich bspw. u.a. um einen Milchbasispreis und um Zu- und Abschläge. Nach Erfassung dieser Größen erfolgt sodann in Schritt 5B eine Berechnung einer optimierten Dosiermenge des Futterzusatzstoffes unter Verwendung der in Schritt 2 eingegeben Daten im Hinblick auf einen wirtschaftlichen Vorteil und unter Berücksichtigung betriebsindividueller Bedingungen bzw. Restriktionen, die u.a. ebenfalls in Schritt 2 eingegebenen und erfasst worden sein können oder anderweitig für einen Nutzer im Voraus spezifisch implementiert worden sein können. Zusätzlich wird bei Berechnungsweg B gegenüber Berechnungsweg A nun eine Superabgabe, die aus Daten des Vorjahres abgeleitet werden kann, für das gesamte Milchwirtschaftsjahr einberechnet. Nach erfolgter Berechnung kann nun in Schritt 6B wiederum vorgesehen sein, eine daraus resultierende Empfehlung hinsichtlich einer Dosiermenge des Futterzusatzstoffes über eine Standardschnittstelle für einen Fütterungscomputer bereitzustellen. Ebenso wie gemäß Berechnungsweg A kann auch hier ein entsprechender Profit, vorzugsweise in der Währung des angegebenen Produktionslandes angezeigt werden.

Gemäß Berechnungsweg C wird eine Berechnung mit dem Ziel durchgeführt, eine Optimierung des Einsatzes des Futterzusatzstoffes, wie bspw. von Lutrell, für ein laufendes Milchwirtschaftsjahr zu erreichen.

Dazu erfolgt zunächst in Schritt 4C eine Erfassung von sogenannten berechnungsrelevanten Zwischengrößen, d.h. Daten, wie sie an einem gegebenen Stichtag, wie bspw. an dem Tag der durchzuführenden Berechnung vorliegen. Darunter fallen bspw. eine bis zum dem Stichtag bereits erfolgte Milchlieferung und ein aktueller Milchfettgehalt. Daraus lassen sich in Schritt 5C dann unter Verwendung der ferner vorgegebenen Milchquote eine Zahl an Tagen berechnen, die bei einem Einsatz des Futterzusatzstoffes unter Verwendung einer ebenfalls berechneten optimierten Dosiermenge bis zum Erreichen der Milchquote verbleiben, d.h. wie lange noch Milch unter Einhaltung der Milchquote mit entsprechendem Gewinn verkauft werden kann. Eine Empfehlung bzgl. der damit verbundenen Dosiermenge an Futterzusatzstoff kann nun in Schritt 6C wiederum über eine Standardschnittstelle für einen Fütterungscomputer bereitgestellt werden. Ein aus den Berechnungen ableitbarer Profit ist auch hier wiederum vorzugsweise in der Währung des angegebenen Produktionslandes anzeigbar.

## Patentansprüche

1. Verfahren zur Optimierung einer Dosiermenge eines zur Milchfettgehalt- und Milchmengensteuerung verwendbaren Futterzusatzstoffes bei einem Fütterungsprozess von laktierenden Wiederkäuern, um eine vorgegebene Milchquote effizient auszuschöpfen, bei dem unter Berücksichtigung dosismengenabhängiger Effekte des Futterzusatzstoffes auf den Milchfettgehalt und die Milchmenge mittels einer Steuereinheit (2) unter Vorgabe prozessrelevanter Parameter Berechnungen über den Ausschöpfungsgrad der Milchquote bei dem Fütterungsprozess in Abhängigkeit der Dosiermenge des Futterzusatzstoffes ausgeführt und in Abhängigkeit von dem Ergebnis der Berechnungen Steuerinformationen zur Steuerung des Fütterungsprozesses angezeigt werden, wobei die Berechnungen mittels einer der Steuereinheit (2) zugeordneten Recheneinheit (3) durchgeführt und vor Erzeugung der Steuerinformationen mittels der Steuereinheit (2) überprüft und validiert werden.

2. Verfahren nach Anspruch 1, bei dem unter Vorgabe einer Anzahl von laktierenden Wiederkäuern in einer Herde, einer durchschnittlichen Milchleistung pro laktierendem Wiederkäuer der Herde, eines durchschnittlichen Milchfett- und Proteingehalts der Herde, und eines Referenzmilchfettgehaltes der Ausschöpfungsgrad der Milchquote in Abhängigkeit der Dosiermenge des Futterzusatzstoffes berechnet und zur Steuerung des Fütterungsprozesses zur Anzeige gebracht wird.

3. Verfahren nach Anspruch 2, bei dem durch zusätzliche Vorgabe eines Milchauszahlungspreises ein maximal erzielbarer Profit pro laktierendem Wiederkäuer für einen vorgebbaren Zeitraum ohne und mit Einsatz des Futterzusatzstoffes berechnet, daraus ein maximaler durch Einsatz des Futterzusatzstoffes bewirkter zusätzlicher Profit pro laktierendem Wiederkäuer für den entsprechenden Zeitraum abgeleitet und die Ergebnisse zur Anzeige gebracht werden.

4. Verfahren nach einem der vorhergehenden Ansprüche, bei dem neben prozessrelevanten Parametern auch betriebsspezifische Parameter vorgegeben werden.

5. Verfahren nach einem der vorhergehenden Ansprüche, bei dem zur Vorgabe der zur Durchführung der Berechnungen vorzugebenden Parameter ein Framework bereitgestellt wird, über welches die Parameter eingegeben werden können.

6. Verfahren nach einem der vorhergehenden Ansprüche, bei dem als Futterzusatzstoff ein Stoff zur Senkung des Milchfettgehalts bei laktierenden Wiederkäuern, insbesondere Lutrell, eingesetzt wird.

7. Verfahren nach einem der vorhergehenden Ansprüche, bei dem anhand der durchgeführten Berechnungen ein Futter hergestellt wird, welches den Futterzusatzstoff in einer derartigen Menge enthält, dass der Ausschöpfungsgrad der Milchquote unter Berücksichtigung des Milchfettgehaltes optimiert wird.

8. Verfahren nach Anspruch 7, bei dem aus den Berechnungen eine Zeitdauer, über welche das hergestellte Futter gefüttert wird, derart bestimmt wird, dass **dadurch** eine maximale Profitabilität erreicht wird.

9. System zur Optimierung einer Dosiermenge eines zur Milchfettgehalt- und Milchmengensteuerung verwendbaren Futterzusatzstoffes bei einem Fütterungsprozess von laktierenden Wiederkäuern, um eine vorgegebene Milchquote effizient auszuschöpfen, mit mindestens

- einer Steuereinheit (2), mittels welcher unter Berücksichtigung dosismengenabhängiger Effekte des Futterzusatzstoffes auf den Milchfettgehalt und die Milchmenge unter Vorgabe prozessrelevanter Parameter Berechnungen über den Ausschöpfungsgrad der Milchquote bei dem Fütterungsprozess in Abhängigkeit der Dosiermenge des Futterzusatzstoffes ausgeführt und in Abhängigkeit von dem Ergebnis der Berechnungen Steuersignale zur Steuerung des Fütterungsprozesses erzeugt werden können,
- einer Recheneinheit (3), die der Steuereinheit (2) zugeordnet ist und mittels welcher die Berechnungen ausgeführt werden können,
- einer Anzeigeeinheit (4), die dazu geeignet ist, das Ergebnis der Berechnungen anzuzeigen.

10. System nach Anspruch 9, das ferner eine Eingabeeinheit (6) vorsieht, über welche die Parameter eingegeben werden können.

11. System nach Anspruch 10, bei dem die Eingabeeinheit (6) so konfiguriert ist, dass die Parameter über eine geeignete auf einer Anzeigeeinheit (7) darstellbaren Eingabemaske eingegeben werden können.

12. Computerprogramm mit Programmcode, der bei Ausführung des Computerprogramms auf einer geeigneten Computeranlage, insbesondere einer Recheneinheit eines Systems nach einem der Ansprüche 9 bis 11 zur Durchführung eines Verfahrens nach einem der Ansprüche 1 bis 8 geeignet ist.

13. Computerprogrammprodukt mit einem computerlesbaren Medium und einem auf dem computerlesbaren Medium gespeicherten Computerprogramm mit Programmcodemitteln, die dazu geeignet sind, bei Ablauf des Computerprogramms auf einer geeigneten Computeranlage, insbesondere einer Recheneinheit eines Systems nach einem der Ansprüche 9 bis 11, ein Verfahren nach einem der Ansprüche 1 bis 8 auszuführen.

14. Computerlesbares Medium mit einem darauf gespeicherten Computerprogramm, das Programmcode umfasst, der bei Ausführung des Computerprogramms auf einer geeigneten Computeranlage, insbesondere einer Recheneinheit eines Systems nach einem der Ansprüche 9 bis 11, zur Durchführung eines Verfahrens nach einem der Ansprüche 1 bis 8 geeignet ist.

15. Algorithmus zur Durchführung einer Optimierung einer Dosiermenge eines zur Milchfettgehalt- und Milchmengensteuerung verwendbaren Futterzusatzstoffes bei einem Fütterungsprozess von laktierenden Wiederkäuern, um eine vorgegebene Milchquote effizient auszuschöpfen, mittels dessen unter Berücksichtigung dosismengenabhängiger Effekte des Futterzusatzstoffes auf den Milchfettgehalt und die Milchmenge unter Vorgabe prozessrelevanter Parameter Berechnungen über den Ausschöpfungsgrad der Milchquote bei dem Fütterungsprozess in Abhängigkeit der Dosiermenge des Futterzusatzstoffes ausgeführt werden können, wobei abhängig von dem Ergebnis der Berechnungen Steuerinformationen zur Steuerung der Dosiermenge des Futterzusatzstoffes bei dem Fütterungsprozess ausgegeben werden können.

Figur 1

Betriebsdaten-
Bitte geben Sie Ihre Daten in die Felder ein:

Anzahl Milchkühe | 1 | positiver Wert ohne Komma-Stelle

durchschnittliche Milchleistung (kg Milch pro Kuh und Jahr) | 2 | Dieser Wert ist positiv und hat keine Komma Stellen

durchschnittlicher Eiweißgehalt (%) | 3 | Grösser 1 und kleiner/gleich 10

durchschnittlicher Fettgehalt (%) | 4 | Grösser 1 und kleiner/gleich 10

einzelbetriebliche Referenzmilchmenge (Milchquote, kg/Jahr) | 5 | positiver Wert ohne Komma-Stelle

Referenzfettgehalt (%) | 6 | Grösser 1 und kleiner/gleich 10

OK

Figur 2

Figur 3